# EUROPEAN PATENT APPLICATION

(11) **EP 0 895 025 A1**
(43) Date of publication of application: **03.02.1999**
(21) Application number: 97202364.2
(22) Date of filing: 29.07.1997
(51) Int. Cl.: F23C 11/00

(54) **Combustion process and apparatus for carrying out the process**

(71) Applicant: Collignon, Patrick, 2970 Schilde (BE); De Backer, Luc, 9255 Buggenhout (BE)
(72) Inventor: Collignon, Patrick, 2970 Schilde (BE); Collignon, Karin, 2970 Schilde (BE); Collignon, Philibert, 2970 Schilde (BE)
(74) Representative: Quintelier, Claude

(57) **Abstract**

A combustion process and apparatus comprising the following successive steps: heating a catalyst (111) in a chamber (102) to a temperature within a predetermined range below the flash point of said catalyst; forming a reaction product by diffusing water (106) in the form of droplets into said chamber in order to have said water droplets reacted with said catalyst; applying an ignition (103) in said chamber so as to enable combustion of said reaction product; and exhausting (107) said combusted reaction product.

## Description

The present invention relates to a combustion process wherein use is made of water and a catalyst.

In the prior art, several combustion processes are known wherein use is made of water in combination with a fuel as catalyst in order to reduce fuel consumption.

PCT/US92/04531 (Hobbs) for example discloses a combustion engine wherein water is injected in the combustion chamber. As catalyst, use is made of fuel, which is injected in the combustion chamber in a conventional manner.

PCT/BR81/00007 discloses a reactor for transforming water and carburants for use as a fuel mixture. In this device, the water/carburant mixture is fed into the reactor and comes into a very hot zone having a temperature of approximately 800°C. This high temperature enables to obtain a decomposition of the mixture which is used for the combustion.

EP-A-0 019 421 discloses a method of burning a liquid fuel and water mixture as gaseous fuel and an apparatus for carrying out said method. In this known method, liquid water is mixed with liquid fuel in a selected ratio. Further, the mixture is heated until both the water and fuel are vaporised and then the mixture is passed to a gaseous fuel burner.

EP-A-0 256 451 discloses a process and device for the production of an inflammable gaseous mixture of liquid fuel, water vapour and combustion air. In this process, liquid water, applied into a first evaporator part, is vaporised. The formed water vapour is fed in a second evaporator part, wherein liquid fuel, which is preferably preheated, is applied. The water vapour enables the liquid fuel to evaporate, forming thus a gaseous mixture of liquid fuel and water which is burned in a combustion chamber.

The drawback of known devices is that, either high temperatures are required (PCT/BR81/00007) in order to obtain a reaction of the mixture water/catalyst and/or still a large amount of catalyst is consumed in the combustion process.

The object of the present invention is to eliminate these drawbacks by providing a combustion process using water which both does not require such high temperatures and enables to consume less catalyst.

To this end, the combustion process according to the invention comprises the following steps :
(a) heating a catalyst in a chamber to a temperature within a predetermined range below the flash point of said catalyst;
(b) forming a reaction product by diffusing water in the form of droplets into said chamber in order to have said water droplets reacted with said catalyst;
(c) applying an ignition in said chamber so as to enable combustion of said reaction product; and
(d) exhausting said combusted reaction product.
In particular, a process, wherein said reaction product is formed by decomposing said water droplets into hydrogen and oxygen, said combustion being realised by burning said hydrogen.

It has been found that, when heating said catalyst and subsequently diffusing water in very small size, i.e. in the form of droplets, that a reaction of the diffused water with the catalyst occurs in particular in such a manner that the water droplets are fused into their atoms hydrogen and oxygen. The formed reaction product, in particular the formed hydrogen and oxygen atoms are enabled to burn into said chamber by means of said ignition. This combustion process has been found to be very suitable, since less high temperatures with respect to known devices are required, i.e. below the flash point of the catalyst, in order to enable burning. Moreover, it has been found that the consumption of the catalyst has been substantially reduced, since it is the reaction product, mainly formed by the diffused water in particular fused into their basic components, that is used as carburant for the ignition process.

According to a first preferred embodiment of the combustion process according to the invention, wherein said exhaustion step is performed in such a manner as to enable a heat transfer from said combusted reaction product to said catalyst. This heat transfer enables to heat up again the catalyst in order to enable a further reaction with further diffused water.

According to a second preferred embodiment of the combustion process according to the invention, wherein said chamber is cooled, respectively said step of diffusing water is interrupted when said temperature is exceeded. This enables to prevent an overheating in said process.

According to a third preferred embodiment of the combustion process according to the invention, wherein further water droplets are diffused in said chamber before said combustion is completed. This enables to have a chain reaction and obtain in this way a continuous combustion process, without requiring to apply for each combustion cycle a further ignition in said chamber. In particular, when combined with the first preferred embodiment, using the heat from the exhaustion gasses to heat up the catalyst. In this particular embodiment, separate means for heating up the catalyst are only used in the first combustion cycle.

According to a fourth preferred embodiment of the combustion process according to the invention, wherein said exhaustion step comprises a regeneration of unburned catalyst in said combusted reaction product. Due to the reaction of water with the catalyst, the catalyst splashes in said chamber and may lead out of the chamber. This embodiment enables to reduce loss of the catalyst out of said chamber and accordingly to further reduce the catalyst consumption.

The present invention further relates to an apparatus for carrying out the process comprising :
(a) a chamber provided for containing a catalyst;
(b) heating means provided in said chamber for heating said catalyst;
(c) diffusing means for diffusing water droplets into said chamber;
(d) ignition means in contact with said chamber for applying an ignition into said chamber; and
(e) an outlet for exhausting combustion products;
   said apparatus further preferably comprises :
(f) a ventilator adjacent said chamber for enabling an air flow through said chamber;
(g) cooling means provided adjacent said chamber for cooling said chamber;
(h) regeneration means provided in said outlet for regenerating at least a part of said catalyst.

The invention will now be described in detail referring to the annexed figure, schematically illustrating a preferred embodiment of the apparatus according to the invention.

The apparatus according to the invention comprises chamber 102 provided to be filled with a catalyst 111, e.g. oil such as arachis oil or synthetic oil, or also for example oleic or stearic acid. It should be noted that the term "catalyst" must be understood in its broadest sense, i.e. not limited to products that initiates chemical reactions, but also for example thermodynamical reactions. The chamber 102 is connected at its outlet with an outlet chamber 109 provided for exhausting combustion gasses through an exhaust duct 107. The illustrated apparatus forms an open combustion system, which could for example be applied as a combustion heater in a central heating system of a building. According to an alternative, the apparatus according to the invention could also be a closed combustion system, and could for example be integrated in an engine from a vehicle.

The apparatus further comprises heating means 104, for example an electrical resistance, provided in said chamber 102 for heating up the catalyst 111. Preferably, the apparatus according to the invention further comprises temperature checking means 108, for example a thermostat, provided in said chamber for checking the temperature of the catalyst.

A ventilator is further preferably provided at the inlet 112 of said chamber, so that an air flow can be imposed through said chamber. The inlet of said chamber further comprises diffusing means 106, such as an ultrasonic nozzle, which is provided for diffusing water coming from a reservoir (not shown).

Further in the inlet, ignition means are provided 103, for example a Bunsen burner. These ignition means are provided to ignite a reaction product, the formation of which being explained further, in the chamber.

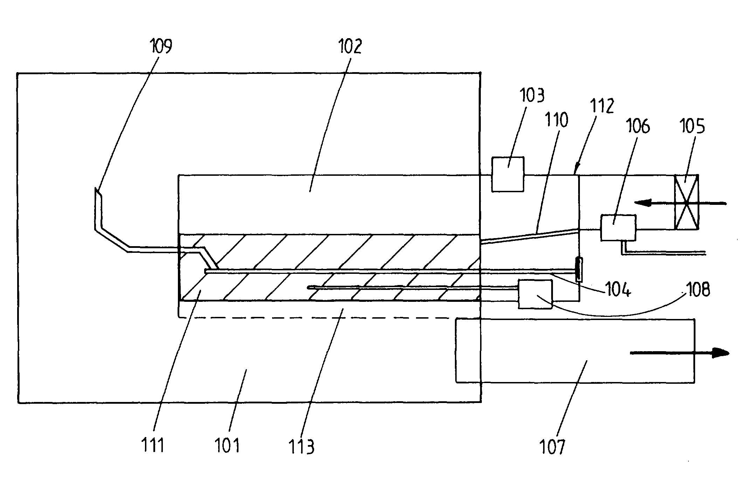

In the preferred embodiment according to the invention, regeneration means 109, respectively 110, are provided at the outlet, respectively the inlet of the chamber, in order to reduce splashing out of the catalyst due to the reaction with water, the reaction being explained further. As illustrated in the figure, the regeneration means have the shape of a bent plate.

Preferably, the chamber is enclosed by cooling means 113, for example ducts provided with cold water, for cooling said chamber. These cooling means could be used if a predetermined temperature is exceeded, which temperature is checked by thermostat 108. An alternative for this overheating problem will be described further.

The process according to the invention will now be described with reference to an experiment, wherein use has been made of arachis oil as catalyst. The process according to the experiment comprises the following steps.

In a first step, the arachis oil is heated up to a temperature between 220° and 260°C, in particular approximately 230°C. It should be noted that satisfactory results have also been achieved with temperatures between 210° and 280°C. Another experiment, wherein use was made of synthetic oil as catalyst, has revealed that other temperatures seemed to be adequate, i.e. between 180° and 210°C, in particular approximately 190°C. In general, it has been found that each catalyst seems to have a temperature range wherein the combustion process, in particular the reaction with water, is most efficient. In practice, the temperature is chosen high enough for enabling to form a reaction product upon contact with the water droplets, but not too high in order to prevent evaporation of the catalyst as much as possible. In each case, the temperature is below the flash point of the catalyst, which is in the case of arachis oil approximately 285°C.

In a second step, water is diffused in the chamber by means of the ultrasonic nozzle or the like, in such a manner to form a "cloud" atomised water droplets. These water droplets come into contact with the catalyst, leading to a reaction of these products and forming thereby a reaction product. In particular, it has surprisingly been found that the reaction occurs by a sudden and powerful energy generation in the water molecules, provided from a heat transfer from the heated catalyst molecules enclosing each of said diffused water molecules. This reaction led to a thermodynamic fission of the water molecules into their basic elements hydrogen and oxygen. During this reaction, it has been found that the catalyst splashes in the chamber. In order to reduce loss of catalyst out of the chamber as much as possible, the chamber preferably comprises a cylindrical shape. For the same purpose, the regeneration means 109 and 110 are provided at the outlet, respectively the inlet from the chamber 102.

The formed reaction product is directly enabled to burn upon applying, in a third step, an ignition into the chamber. In the experiment, the ignition came from a pilot flame from a Bunsen burner. Other ignition means could also be provided, for example a sparking plug, which has been found to be adequate in particular in closed systems, for example in a combustion system of a car. The second and third step are performed immediately after one another, in such a manner that injected water is practically combusted in real time.

The fourth step comprises the exhaustion of the combustion gasses through the outlet chamber 102 and exhaust duct 107. Preferably, the exhaustion gasses pass along the lower portion of the chamber wall, in such a manner that a heat transfer from said exhaust gasses to said catalyst is achieved. According to a preferred embodiment at least a portion of the catalyst splashing out of the chamber is recuperated by means of the regeneration means 109 and 110.

Preferably, the process comprises a fifth step, wherein further water droplets are diffused in said chamber, before the combustion of reaction product is completed. This enables to form a chain reaction whereby the third step (ignition) is not required. According to this embodiment, step one to four form in fact an initialisation cycle, and step five forms in combination with step four each time a subsequent cycle of a continuous combustion process. Water is thus diffused in a pulsed manner.

As mentioned hereinabove, the temperature could exceed a predetermined temperature, for example the flash point of the catalyst minus 5°C. This could for example occur if the temperature of the exhaustion gasses, leading to the mentioned heat transfer, is too high. In order to prevent more heat accumulation, the process could, as an alternative to the mentioned cooling means, be interrupted for a while until a second predetermined temperature is attained. In this case, the ignition process must be applied after each cycle or after a series of subsequent cycles.

In the described embodiment, water is diffused in the form of droplets. It should be noted that these water droplets may be either in the liquid fase or in the vapour fase.

The control of the air flow is relatively important. In practice, the air flow may not be to low, in order to prevent flame formation at the inlet of the chamber, to prevent heat accumulation in the chamber which would lead to an overheating of the catalyst and to permit an efficient evacuation of the combustion gases. The air flow may also not be too high, in order to enable an efficient combustion of the reaction product. In a prototype according to the invention, an air flow of approximately 5 l/sec seemed to be adequate.

Variants to the illustrated apparatus may be built to increase the heat transfer from the combusted reaction product to the catalyst, or to reduce the amount of consumption of catalyst. To improve the heat transfer, the exhaust gases could for example be channelled through a heat exchanger which is built in the chamber 102 and enclosed by the catalyst.

The water injection means can be provided below the surface level of the catalyst. This reduces the amount of water evaporation, which occur when water is in contact with the walls of the chamber, and improves the reaction of the water molecules with the catalyst.

The illustrated apparatus has a horizontal set up, i.e. a horizontal flow through type of combustion. According to an alternative, the apparatus has a vertical set up. Such a vertical set up does not require a ventilator or the like to obtain an efficient exhaust of the combustion gases and enables to recapture easily the catalyst splashing out of the chamber.

## Claims

1. A combustion process comprising the following successive steps :
(a) heating a catalyst in a chamber to a temperature within a predetermined range below the flash point of said catalyst;
(b) forming a reaction product by diffusing water in the form of droplets into said chamber in order to have said water droplets reacted with said catalyst;
(c) applying an ignition in said chamber so as to enable combustion of said reaction product; and
(d) exhausting said combusted reaction product.

2. A process according to claim 1, wherein said reaction product is formed by decomposing said water droplets into hydrogen and oxygen, said combustion being realised by burning said hydrogen.

3. A process according to claim 1 or 2, wherein said exhaustion step is performed in such a manner to enable a heat transfer from said combusted reaction product to said catalyst.

4. A process according to claim 3, wherein said chamber is cooled/respectively said step of diffusing water is interrupted when said temperature is exceeded.

5. A process according to any one of the preceding claims, in particular according to claim 3, wherein further water droplets are diffused in said chamber before said combustion is completed.

6. A process according to any one of the preceding claims, wherein said exhaustion step comprises a regeneration of unburned catalyst in said combusted reaction product.

7. A process according to any one of the preceding claims, wherein use is made of arachis oil as catalyst, and wherein said heating step is performed until a temperature of preferably between 210 °C and 280 °C is obtained, in particular between 220 and 260°C.

8. A process according to any one of the preceding claims, wherein use is made of synthetic oil as catalyst, and wherein said heating step is performed until a temperature of preferably between 180 °C and 210 °C is obtained, in particular approximately 190°C.

9. A process according to any one of the preceding claims, wherein an air flow is applied into said chamber.

10. An apparatus for carrying out the process according to any one of the preceding claims comprising :
(a) a chamber provided for containing a catalyst;
(b) heating means provided in said chamber for heating said catalyst;
(c) diffusing means for diffusing water droplets into said chamber;
(d) ignition means in contact with said chamber for applying an ignition into said chamber; and
(e) an outlet for exhausting combustion products;
said apparatus further preferably comprises :
(f) a ventilator adjacent said chamber for enabling an air flow through said chamber;
(g) cooling means provided adjacent said chamber for cooling said chamber;
(h) regeneration means provided in said outlet for regenerating at least a part of said catalyst.
